# EUROPEAN PATENT APPLICATION

(11) **EP 4 471 396 A1**
(43) Date of publication of application: **04.12.2024**
(21) Application number: 23177069.4
(22) Date of filing: 02.06.2023
(51) Int. Cl.: G01M 3/00, G01M 3/20, G01M 3/22

(54) **LEAKAGE DETECTION**

(71) Applicant: Airbus Operations GmbH, 21129 Hamburg (DE)
(72) Inventor: Wolff, Christian, 21129 Hamburg (DE); Kurre, Jens-Dietrich, 21129 Hamburg (DE)

(57) **Abstract**

The present invention relates to leakage sensitive arrangement. In order to improve detection of a leakage of a substance, a leakage sensitive arrangement (10) is provided that comprises an emission generating compound (12). The emission generating compound is applicable on an outside (14) of an enclosure (16) encapsulating a substance (18) from the surroundings (20). The applied emission generating compound is configured to be exposed to an activation energy (24) resulting from leaking substance (26) from the inside (28) of the enclosure. The activation energy causes a chemical reaction (30) of the emission generating compound. The chemical reaction actively produces an emission (32) detectable by a detector (34).

## Description

### FIELD OF THE INVENTION

The present invention relates to leakage detection; more specifically, the invention relates to a leakage sensitive arrangement, to a detection system, and to a method for leakage detection.

### BACKGROUND OF THE INVENTION

In equipment that stores, supplies or processes fluids, like hydrogen, leakage of the fluid may occur. The leaking fluid may impair the operation of the equipment and hence, it may be desirable to locate the leakage to restore full operation of the equipment. A leakage inspection system may be applied for this purpose. However, it has been shown that leakage of some fluids like Hydrogen is difficult to sense when the leakage is rather small, for example.

### SUMMARY OF THE INVENTION

There may thus be a need for improved detection of a leakage of a substance.

The object of the present invention is solved by the subject-matter of the independent claims; further embodiments are incorporated in the dependent claims. It should be noted that the following described aspects of the invention apply also for the leakage sensitive arrangement, for the detection system and for the method for leakage detection.

According to the present invention, a leakage sensitive arrangement comprising an emission generating compound is provided. The emission generating compound is applicable on an outside of an enclosure encapsulating a substance from the surroundings. The applied emission generating compound is configured to be exposed to an activation energy resulting from leaking substance from the inside of the enclosure. The activation energy causes a chemical reaction of the emission generating compound. The chemical reaction actively produces an emission detectable by a detector.

As an advantage, the emission generating compound is easily oxidizable, e.g. ignitable, and oxidizes quickly with low total heat load. As an example, the emission generating compound burns down quickly with low total fire heat load. As an advantage, the emission generating compound reacts with gaseous hydrogen. As an advantage, the emission generating compound reacts with hydrogen and releases easily detectable molecules.

As an advantage, the emission generating compound emits heat when oxidized, e.g. when ignited, and generates easily detectable and typical "fire molecules" (e.g., smoke, CO, CO2, NOx and the like).

As a further advantage, leakage incidents invisible to conventional detector technologies are uncovered.

As an advantage, detection layer from the emission generating compound can be combined and/or implemented/integrated within a fire-retardant thermal insulation layer.

According to an example, the activation energy for the emission generating compound results from a thermal energy release of the leaking substance; and/or is initially generated in the emission generating compound itself by contact between the emission generating compound and the leaking substance. The activation energy causes a self-boosting effect through the chemical reaction of the emission generating compound leading to the detectable emission.

According to an example, the leaking substance is hydrogen and the chemical reaction of the emission generating compound is initiated by leaking hydrogen from the enclosure.

According to an example, the emission generating compound comprises a reaction controller. The reaction controller is configured to make the chemical reaction of the emission generating compound steerable towards at least one of the group of:
- generation of activation energy upon contact with the substance,
- retardation of the chemical reaction,
- enhancing the reaction products of the chemical reaction,
- isolating the reaction products from the surroundings, and
- confining the chemical reaction to a geometrically restricted space.

According to the present invention, also a detection system for leaking substances is provided. The detection system comprises at least one detector, and a leakage sensitive arrangement according to one of the preceding example comprising an emission generating compound layer. The at least one detector is located in a detection distance towards the emission generating compound layer. The at least one detector is configured to generate a detection signal upon contact with an emission of the emission generating compound layer in the detection distance.

According to an example, the system further comprises an envelope. The envelope encapsulates the enclosure and the emission generating compound layer in an inner volume. The gap between the enclosure and the envelope in the inner volume provides an emission receiving space. The emission receiving space is accessible by the at least one detector. The emission receiving space is formed to collect the emission and configured to focus and/or enhance it towards the at least one detector.

According to an example, the system further comprises a shutoff valve at a duct arrangement. The duct arrangement comprises at least one of the group of a supply duct, a ventilation duct, an exhaust duct and combinations thereof. The system also comprises a processing unit. The processing unit is configured to be connected to the shutoff valve and the at least one detector. The at least one supply line supplies the enclosure when the shutoff valve is open. The at least one detector is configured to monitor the enclosure. The detection signal is configured to trigger the processing unit to close the shutoff valve in order to stop supply by the supply lines to and/or from the enclosure. The shutoff valve is configured to stop hydrogen supply to the enclosure.

As an advantage, an immediate extinguishing of burning substance, e.g., hydrogen micro-flames is provided.

According to the present invention, also a method for leakage detection is provided. The method comprising the following steps:
- Providing an emission generating compound at an outside of an enclosure,
- Providing at least one detector in a detection distance to the enclosure,
- Operating the at least one detector while operating the enclosure with a substance,
- Bringing leaking substance of the enclosure or burning leaking substance in contact with the emission generating compound to yield an emission,
- Detecting, by the at least one detector, the emission,
- Generating, by the at least one detector, a detection signal, and
- Stopping the operation of the enclosure with the substance by closing shutoff valves, based on the detection signal.

According to an aspect, a substance is provided that interacts with an occurring leakage that is otherwise difficult to detect. The interacting substance provides a reaction with the leaked substance which reaction is then detectable in an easier way than without the substance. The substance provides an actively reaction indicator of a leakage. The substance provides an intermediary role in the leakage detection process. In an example, leakage detection is provided via the substance providing a flame, for example, triggered by the leaked fluid, which flame is then being detected by its reaction products. In another example, leakage and flame detection is provided via the substance providing a reaction triggered by the flame which reaction is then being detected by its reaction products.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a leakage sensitive arrangement.
Fig. 2 shows an example of a detection system for leaking substances.
Fig. 3 shows basic steps of an example of a method for leakage detection.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

In an example, a hydrogen gas and hydrogen flame detection sacrificial layer is provided.

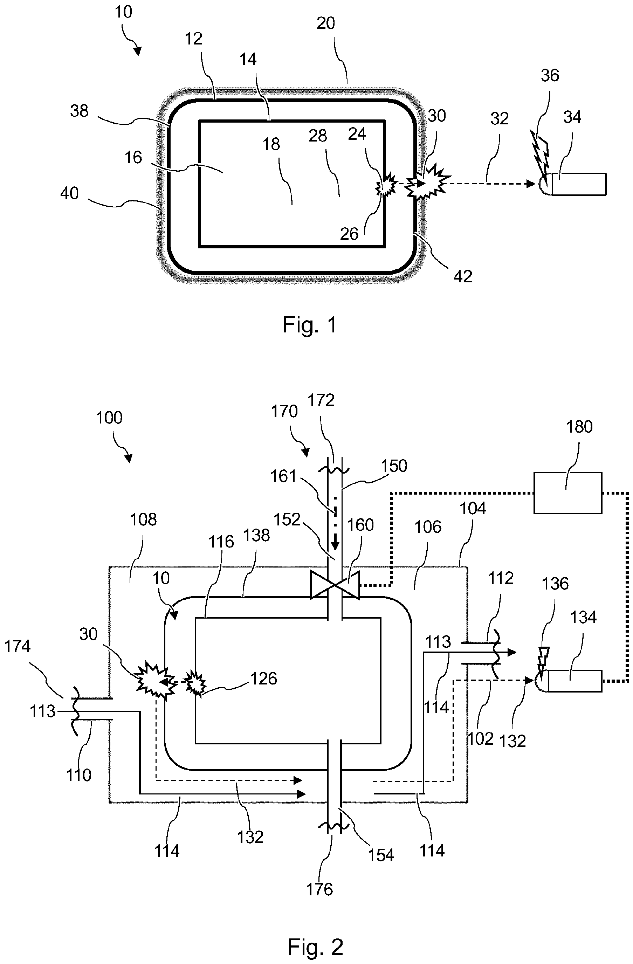

Fig. 1 schematically shows an example of a leakage sensitive arrangement 10. The leakage sensitive arrangement 10 comprises an emission generating compound 12. The emission generating compound 12 is applicable on an outside 14 of an enclosure 16 encapsulating a substance 18 from the surroundings 20. The applied emission generating compound 12 is configured to be exposed to an activation energy 24 resulting from leaking substance 26 from the inside 28 of the enclosure 16. The activation energy 24 causes a chemical reaction 30 of the emission generating compound 12. The chemical reaction 30 actively produces an emission 32 detectable by a detector 34.

The term "leakage sensitive arrangement" relates to an object that changes its measurable properties depending on a change of its environment.

The term "emission generating compound" can be understood as a substance that actively expels, emits or transmits a part of itself into its environment. The term "emission generating compound" can also be related to as emitter, transmitter, pulse transmitter, pulse emitter, radiator, transducer, projector, sender, or source.

The "leakage sensitive arrangement" can also be referred to as a leakage sensitive and activation energy sensitive arrangement.

The term "compound" can also be referred to as substance, agent or material.

The term "enclosure" relates to an entity that separates two spaces. One space is the environment and the other space is an inner volume inside the enclosure 16. The inner volume and the environment do not contact each other. The enclosure 16 encloses the inner volume. The inner volume can be referred to as inside 28.

The term "applicable" means that the emission generating compound 12 does not change its condition or state at the enclosure 16, such that it, e.g., spontaneously reacts.

The enclosure 16 can also be referred to as a tank, a vessel, a container, a cistern or a basin. In an example, the storing unit can also be a tube or a pipe or a piping system.

The term "outside" relates to the opposite of the inside 28 in Fig. 1. Outside 14 describes the surface of the enclosure 16 that is not in contact to the inner volume. The outside 14 can also comprise recesses of the enclosure 16 and recesses at flanges of the connection of supplies to the enclosure 16.

The term "encapsulating" relates to the function of the enclosure 16 in separating the inner volume from the environment such that they do not contact each other.

The term "substance" relates to matter and can be in a gaseous or liquid state being a fluid.

In an example, the substance 18 is a material that carries a chemical energy.

In an example, the substance 18 is a fuel.

In an example, the substance 18 comprises gaseous hydrogen.

In another example, the substance 18 is cryogenic or liquid hydrogen, not shown in Fig. 1.

In another example, the substance 18 is pressurized hydrogen.

In an example, the enclosure 16 is leak-tight with respect to hydrogen, not shown in Fig. 1.

The term "surroundings" can be understood as a structure the enclosure 16 is connected to or embedded in. The surroundings 20 are at the environment. Outside of the surroundings 20 is the external environment.

In an example, the surroundings 20 are a storage space of a vehicle.

In another example, the surroundings 20 are the interior of an aircraft.

The term "activation energy" can be understood as an energetical barrier that needs to be overcome such that the emission generating compound 12 changes its state or condition by itself. The change of state is irreversible and is induced by applying a certain amount of energy to the emission generating compound 12. The certain amount or quantum of energy can be applied in the form of electromagnetic, thermal or mechanical energy.

The "leaking substance" can also be referred to as leaked substance. It refers to the process of a fluid permeating or creeping through channels and holes of the enclosure 16 from the inner volume of the enclosure 16 to the outside 14 of the enclosure 16 in Fig. 1.

The term "chemical reaction" relates to the rearrangement and transfer of electrons between the atoms within the matter of the emission generating compound 12.

The term "emission" relates to the process of a material in actively radiate, emit, expel or beam a part of its matter or photons into its environment. The emission generating compound 12 emits an emission 32 in Fig. 1. The emission 32 does not necessarily comprise the material itself, it predominantly comprises a chemically and physically transformed part of the material.

The term "detector" relates to an entity that is able to generate a signal upon contact with the emission 32 in Fig. 1.

In an example, the detector 34 is responsive to electromagnetic waves, to matter waves, such as vibration or certain molecules or particles in the matter wave. The electromagnetic waves comprise UV, VIS, IR, at 180 to 800 nm wavelength or microwave radiation. The matter waves might further comprise atoms, ions, molecules or electrons, protons or neutrons.

In an example, a leakage sensitive and activation energy sensitive arrangement comprising an emission generating compound 12 is provided. The emission generating compound 12 is applicable on an inside 28, not shown in Fig. 1, or outside 14 of an enclosure 16 encapsulating a substance 18 from the surroundings 20. The applied emission generating compound 12 is configured to be exposed to an activation energy 24 resulting from the oxidation of the leaking substance 26 coming from the inside 28 of the enclosure 16. The applied emission generating compound 12 is configured to be exposed to the leaking substance 26 coming from the inside 28 of the enclosure 16. The activation energy 24 causes a chemical reaction 30 of the emission generating compound 12. The exposure of the leaking substance 26 to the emission generating compound 12 causes a chemical reaction 30 of the emission generating compound 12 with the leaking substance 26. The chemical reaction 30 actively produces an emission 32 detectable by a detector 34.

In an example not shown in Fig. 1, the chemical reaction 30 of the emission generating compound 12 is an exothermic oxidation reaction. The detection 36 of the detector 34 is based on exothermic oxidation products comprising matter and/or energy.

The term "exothermic oxidation reaction" describes an electron transfer reaction within the emission generating compound 12 between an oxidizing agent and a reducing agent, which emits thermal energy and the reaction products.

In an example, the emission generating compound 12 comprises an oxidizing agent and a reducing agent.

In an example, the oxidizing agent comprises an oxygen source and the reducing agent comprises a metal and/or a non-metal.

In an example, the non-metal comprises at least one of the group: carbon, sulphur or nitrogen or combinations thereof, not shown in Fig. 1.

In an example, the emission generating compound 12 is a pyrotechnical material.

In an example, the emission generating compound 12 is cellulose nitrate or cellulose nitrate with a varying degree of nitration.

In an example, the matter comprises atoms, ions, molecules or electrons, protons or neutrons.

In another example, the matter is smoke or combustion or fume molecules like CO, CO2, NOx, SO2. H2O, metal oxides

In an example, the energy comprises UV, VIS, IR or microwave photons and/or mechanical energy.

In an example, the emission 32 of Fig. 1 can be perceived as an optical, acoustic, electric or mechanical signal.

As an advantage, the emission generating compound 12 can be deployed in an oxygen-poor atmosphere.

In an example not shown in Fig. 1, the activation energy 24 for the emission generating compound 12 results from a thermal energy release of the leaking substance 26; and/or is initially generated in the emission generating compound 12 itself by contact between the emission generating compound 12 and the leaking substance 26. The activation energy 24 causes a self-boosting effect through the chemical reaction 30 of the emission generating compound 12 leading to the detectable emission.

In an example, the thermal energy release or the release of thermal energy takes place at the burning leaking substance 26. The thermal energy is released via a flame of the burning substance in the form of radiation or convection.

In an example, flames of a burning leaking substance 26, not shown in Fig. 1, transmit their thermal energy predominantly via convection. This makes the flame difficult to detect via its emitted radiation. The emission generating compound 12 is activated by the heat convection of the flame, leading to a chemical reaction 30 and a second flame with a higher radiation, which is easier to detect.

In an example, the flames stem from burning fuel.

In an example, the flames stem from burning hydrogen, not shown in Fig. 1.

In another example, the hydrogen burns to yield hydrogen micro flames, outside 14 at the surface of the enclosure 16.

In an option, the activation energy 24 is initially generated in the emission generating compound 12, not shown in Fig. 1. The emission generating compound 12 comprises a reaction initiator or reaction starter that produces activation energy 24 upon contact with the leaking substance 26 from the enclosure 16. Here the activation energy 24 can also be regarded as the energy of the chemical bonds of the leaking substance 26.

In an example, the reaction initiator produces heat as activation energy 24 in contact with hydrogen or hydrogen and oxygen, not shown in Fig. 1.

In an example, the reaction initiator comprises an organometallic compound.

In an example, the reaction initiator comprises Pd, or Pt.

The term "self-boosting effect" means that the activation energy 24, e.g., the hydrogen micro-flame, not shown in Fig. 1, is enhanced by the chemical reaction 30 of the emission generating compound 12. The activation energy 24 leads to a chain reaction in the emission generating compound 12. The micro flame is a first smaller flame and the chemical reaction 30 of the emission generating compound 12, respectively the emission 32 provides a second larger flame. The second larger flame is easier to detect with the detector 34. The same refers to the other detectable emissions like mechanical energy or heat energy. The emission generating compound 12 so to say, enhances the event of the leaking substance 26 to make it detectable, shown by the larger chemical reaction 30 in comparison to the smaller activation energy 24 in Fig. 1.

In an example, the emission generating compound 12 can also be regarded as part of the detector 34.

As an advantage, leakage sites invisible to conventional detector technology are disclosed.

In an example not shown in Fig. 1, the leaking substance 26 is hydrogen and the chemical reaction 30 of the emission generating compound 12 is initiated by leaking hydrogen from the enclosure 16.

In an example, the leaking hydrogen at the enclosure 16 burns and the thermal energy initiates the chemical reaction 30 of the emission generating compound.

In a further example, the leaking hydrogen at the enclosure 16 is contacted with the reaction initiator or activating material at the emission generating compound. The activating material, or activator generates thermal energy upon contact with the hydrogen, the thermal energy initiates the chemical reaction 30 of the emission generating compound 12.

In an option of Fig. 1, the emission generating compound 12 is applied as an emission generating compound layer 38 at the surface of the enclosure 16.

The term "surface" can be understood as opposite to an inner volume. It resides outside 14 of the enclosure 16.

In an example, the emission generating compound 12 is formed as a thin foil and wrapped around the enclosure 16.

In an example, a distance is provided between the emission generating compound layer 38 and the enclosure 16, such that the contact between the leaking substance 26 and the emission generating compound layer 38 is optimized.

In an example, the distance or gap is chosen to ensure proper activation of the emission generating compound 12 by a hydrogen micro-flame, not shown in Fig. 1.

In another example, the emission generating compound 12 is applied in a first fluid form on the enclosure 16. Afterwards the emission generating compound 12 resides in a second state and forms a layer at the surface of the enclosure 16.

In an example, not the whole surface area of the enclosure 16 is covered, the emission generating compound 12 covers areas to-be-monitored or especially leak-critical areas.

In an example, the emission generating compound layer 38 can have other functions with regards to the enclosure 16 of Fig. 1.

In an example, the emission generating compound layer 38 acts as an insulation.

In an example, the emission generating compound layer 38 can be combined with a fire-resistant thermal insulation material.

In an example, the emission generating compound layer 38 acts as a flange or a connection to another functional part or part of a shutoff valve or other system components.

In an example of Fig. 1, the emission generating compound layer 38 is covered by a protective layer 40. The protective layer 40 hampers deactivation of the chemical reactivity of the emission generating compound 12. The emission generating compound layer 38 is chemically reactive to the substance 18 permeating and/or diffusing through the protective layer 40. The protective layer 40 can be covered, i.e. protected, from both sides.

In an example, the emission generating compound comprises micro- or even nano-spherules, which are covered with a sort of wax providing protection against humidity or external oxygen.

In an example, the composition of the emission generating compound and thus its emission varies, depending on the site of the enclosure 16.

In an example, a certain pattern of the emission 32, not shown in Fig. 1, of the emission generating compound layer 38 is indicative for the site of the leaking at the enclosure 16. Different signaling substances can be added to the emission generating compound layer 38 that mark a certain site at the enclosure 16. The composition of the emission 32 varies with the kind of signaling substance added and thus the emission 32 marks the site or location of the leakage or leaking substance 26.

In an example, a layer is provided that protects the emission generating compound layer 38 at its surface from deteriorating substances, substances that decrease chemical reactivity of the emission generating compound layer 38 or substances and radiation that can unintentionally cause a chemical reaction 30 of the emission generating compound 12.

In an example, the layer is provided on the surface facing towards the carrier structure to which the compound is applied.

In an example, the layer is provided on the surface facing away from the carrier structure to which the compound is applied, i.e. on the visible side.

In an example, the layer is provided at both surfaces of the emission generating compound layer 38.

In an example, the protective layer 40 is configured such that hydrogen can penetrate it and reach the emission generating compound layer.

In an example of Fig. 1, the emission generating compound 12 comprises a reaction controller 42. The reaction controller 42 is configured to make the chemical reaction 30 of the emission generating compound 12 steerable towards at least one of the group of:
- generation of activation energy 24 upon contact with the substance 18,
- retardation of the chemical reaction 30,
- enhancing the reaction products of the chemical reaction 30,
- isolating the reaction products from the surroundings 20, and
- confining the chemical reaction 30 to a geometrically restricted space.

In an example, the emission generating compound 12 is combined with a reaction controller 42. The reaction controller 42 comprises a substance or a mixture of different substances that can influence the chemical reaction 30 of the emission generating compound 12 in Fig. 1.

In an example, one of these substances is a reaction starter, or reaction initiator. The reaction initiator comprises a substance that generates or produces activation energy 24 when in contact with the leaking substance 26 to start the chemical reaction 30 of the emission generating compound 12.

In an example, one of these substances decreases or retards the chemical reaction rate to slow down the reaction. It leads to emission 32 of more energy or matter over a longer period to ensure better detection 36 in Fig. 1.

In an example, one of these substances enhances or amplifies the reaction products of the chemical reaction 30. This can be realized by mixing the emission generating compound 12 with a substance that emits more energy via UV/VIS photons than via microwave radiation or convection. It can also be realized by adding certain marker substances to the emission generating compound layer, e.g., weakly radioactive tracers.

In an example, one of these substances isolates the reaction products, e.g., heat from the surroundings 20, such that the heat does not damage the enclosure 16. The isolating substance absorbs the heat and converts it into, e.g., UV/VIS photons.

In an example, one of these substances can be combined with the emission generating compound 12 to confine it to a certain geometrical shape and confine its chemical reaction 30 to a certain space or area. The substance is thermally insulating and flame retarding and is combined with the emission generating compound 12 to form, e.g., a path comprising the emission generating compound 12. The path or conduit comprising the emission generating compound 12 restricts the spread of the chemical reaction 30 of the emission generating compound 12 and provides a predetermined direction for the spread of the chemical reaction 30 in Fig.1.

In an example, the reaction controller 42 also has different functions with regards to the enclosure 16, e.g., it isolates the enclosure 16.

Fig. 2 shows an example of a detection system 100 for leaking substances. The detection system 100 for leaking substances comprises at least one detector 134 and a leakage sensitive arrangement according to one of the preceding examples comprising an emission generating compound layer 138 (also referred to with reference numeral 12, as in the context of Fig. 1). The at least one detector 134 is located in a detection distance 102 towards the emission generating compound layer. The at least one detector 134 is configured to generate a detection signal 136 upon contact with an emission 132 of the emission generating compound layer 138 in the detection distance 102.

The term "in a detection distance" relates to an arrangement in which the detector is placed with a certain distance from the leakage site, i.e. the detector is not placed directly at the site, but further away such that the detection of the intermediate reaction of the compound is still possible. The detector is placed spaced apart by a determined detection distance.

In an example, the detector 134 responds to the fume molecules of the emission 132 of the emission generating compound 138, also indicated with reference numeral 12, as mentioned above. In this case the detector 134 samples the emission with IR or UV/VIS radiation in order to gain a light absorbance or emission signal. The detector 134 might also comprise a mass spectrometer and/or a gas chromatograph in order to detect gaseous organic or inorganic combustion reaction molecules generated by the emission generating compound 138. The detector 134 can be an NMR spectrometer or an electrochemical detector or an acoustic detector, not shown in Fig. 2.

In an example, the detector 134 is a carbon monoxide detector.

In an example, the emission 132 is configured such that it overcomes obstacles in the detection distance 102 to the detector 134.

In an example, more than one detector 134 is provided, for example two, three, five or an array of detectors and different kinds of detectors are combined.

In an example of Fig. 2, the system further comprises an enclosure 116 for storing the leaking substance 126.

In an example of Fig. 2, the system further comprises an envelope 104. The envelope 104 encapsulates the enclosure 116 and the emission generating compound layer 138 in an inner volume 106. The gap between the enclosure 116 and the envelope 104 in the inner volume 106 provides an emission receiving space 108. The emission receiving space 108 is accessible by the at least one detector 134. The emission receiving space 108 is formed to collect the emission 132 and configured to focus and/or enhance it towards the at least one detector 134.

In an example, an envelope 104 is provided. The envelope 104 can be configured as a bag, a chimney, a channel or a chamber that collects the emissions or the fume of the emission generating compound in an emission receiving space 108. The envelope 104 can also be a fuel storage space or an inner space of a vehicle, not shown in Fig. 2. The envelope 104 dictates the emission 132 or fumes a path towards the at least one detector 134.

The "emission receiving space" can also be referred to as trap, collector, accumulator, interceptor, sampler, gatherer, receiver, captivating unit, director, controller, assembler, receiver.

In an example, the emission receiving space 108 provides a reflective inner surface to reflect the photons or radiation of the emission 132 towards the detector 134, not shown in Fig. 2.

In an example, the emission receiving space 108 is provided with a photo multiplier.

In an example, the emission receiving space 108 comprises optical guides, or fiber optics to guide the photons towards the detector 134.

In an example, the envelope 104 provides a concentrator in front of the detector 134 in order to accumulate emission 132, not shown in Fig. 2.

As an advantage, the detection 136 is more reliable, since the emission is focused on the detector 134. As another advantage, the number of detectors is reduced.

In an example, the emission generating compound is applied on the interior surface of the envelope 104 that faces the emission receiving space 108. The gap of the emission receiving space 108 is configured to bring the emission generating compound in contact with leaking and/or burning hydrogen from the enclosure 116.

In an example of Fig. 2, the envelope 104 further comprises at least one inlet 110 and at least one outlet 112 for a ventilation fluid 113. The emission receiving space 108 of the envelope 104 is formed to be connected to the at least one inlet 110 and the at least one outlet 112. The emission receiving space 108 provides a stream 114, comprising the ventilation fluid 113, from the at least one inlet 110 to the at least one outlet 112. The emission receiving space 108 is formed to steer and accelerate a detectable emission from the emission generating compound layer 138 towards the at least one detector 134 by the stream 114 of ventilation fluid.

In an example, the envelope 104 is connected to a supply of ventilation fluid 113 and formed such that the ventilation fluid 113 forms a fast stream of fluid in Fig. 2. The fast stream of fluid passes by the at least one detector 134 or through the detector and carries the smoke, fume or emission molecules to at least one detector 134. The emission molecules are accelerated by the stream 114 of the ventilation fluid 113 from the leakage or the leaking substance 126.

As an advantage, the detection 136 of emission molecules or fume molecules is accelerated.

In an example, the ventilation fluid 113 stems from overboard a moving vehicle.

In an example, the ventilation fluid 113 is generated by a propulsion system of the vehicle, not shown in Fig. 2.

In an example, the ventilation fluid 113 is an inert gas.

In an example, the ventilation fluid 113 is air.

In an example, the ventilation fluid 113, gas or gas mixture is flowing in a closed loop in the emission receiving space 108.

In an example, the ventilation fluid 113 is brought to circuit in the emission receiving space via a pump, without any air or gas supply from the outside. In order to achieve this, the inlet 110 and outlet 112 can be a fully open, partially open, partially closed or fully closed to loop the ventilation fluid 113 or another gas or gas mixture.

In an example of Fig. 2, the system further comprises at least one supply line 150, at least one supply line inlet 152 and at least one supply line outlet 154. The supply line 150 is provided for supplying, i.e. transporting, a fuel like hydrogen. The supply line inlet 152 and the supply line outlet 154 are at the envelope 104. The supply line inlet 152 and the supply line outlet 154 are configured to guide the at least one supply line from and/or to the enclosure 116.

In an example of Fig. 2, the system further comprises a shutoff valve 160 at a duct arrangement 170. The duct arrangement 170 comprises at least one of the group of a supply duct 172, a ventilation duct 174, an exhaust duct 176 and combinations thereof. The system also comprises a processing unit 180. The processing unit 180 is configured to be connected to the shutoff valve 160 and the at least one detector 134. The at least one supply line 150 supplies the enclosure 116 when the shutoff valve 160 is open. The at least one detector 134 is configured to monitor the enclosure 116. The detection signal 136 is configured to trigger the processing unit 180 to close the shutoff valve 160 in order to stop supply by the supply lines to and/or from the enclosure 116. The shutoff valve 160 is configured to stop hydrogen supply, shown by arrow 161, to the enclosure 116.

Regarding Fig. 2, it should be noted that the position of the shutoff valve 160 is shown located inside the envelope 104 and near the enclosure 116 where the enclosure is supplied by the supply line as an example.

In another example, the shutoff valve 160 is directly located between the enclosure 116 and the supply line 150 to ensure that there is no hydrogen residing in the transition between the supply line 150 and the enclosure 116. This makes sure, that an event of leaking hydrogen, i.e., the leaking substance 126, can properly be interrupted by closing the shutoff valve 160, such that no residing hydrogen in the supply lines nurtures the leaking event.

In a further example, the shutoff valve 160 is located further away from the enclosure 116, such as at the envelope 104 or even outside the envelope 104.

In an example, the shutoff valve 160 is a cryogenic valve.

In an example, the immediate response of the at least one detector 134 leads to an immediate closure of the shutoff valve 160.

In an example of Fig. 2, the enclosure 116 of the system is configured as at least one of the group of a fluid consuming load configured to provide electrical and/or mechanical energy from the hydrogen, a supply system configured to supply hydrogen, a storing unit configured to supply hydrogen via the supply system to a fluid consuming load and/or a functional unit and a functional unit configured to be contactable by hydrogen.

The term "functional unit" can be understood as gas compressor or heat exchanger or any other entity in contact with hydrogen.

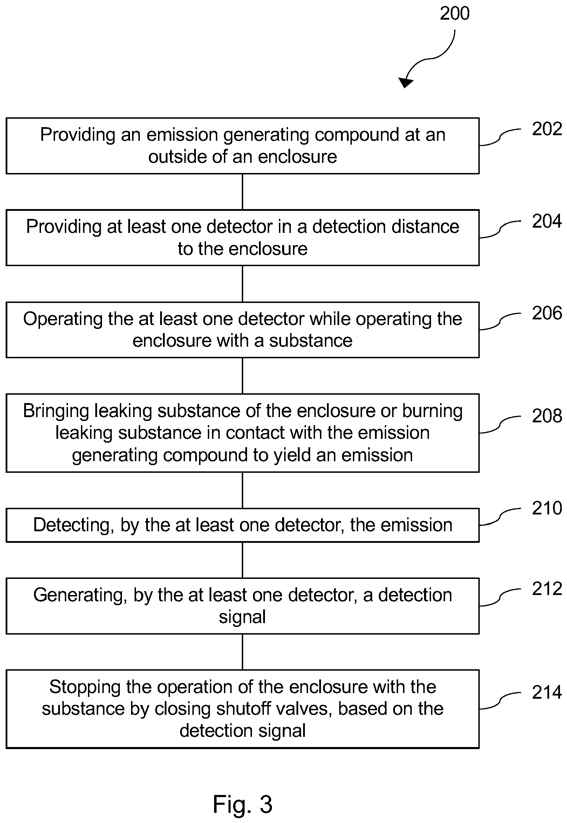

Fig. 3 shows basic steps of an example of a method 200 for leakage detection. The method 200 comprises the following steps:
- In a first step 202, an emission generating compound is provided at an outside of an enclosure.
- In a second step 204, at least one detector in a detection distance to the enclosure is provided.
- In a third step 206, the at least one detector is operated while operating the enclosure with a substance;
- In a fourth step 208, leaking substance of the enclosure or burning leaking substance is brought in contact with the emission generating compound to yield an emission.
- In a fifth step 210, by the at least one detector, the emission is detected;
- In a sixth step 212, by the at least one detector, a detection signal is generated; and
- In a seventh step 214, the operation of the enclosure with the substance is stopped by closing shutoff valves, based on the detection signal.

In an example of the method, an existing hydrogen processing system is retrofitted with the detection arrangement.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A leakage sensitive arrangement (10) comprising an emission generating compound (12);
wherein the emission generating compound is applicable on an outside (14) of an enclosure (16) encapsulating a substance (18) from the surroundings (20);
wherein the applied emission generating compound is configured to be exposed to an activation energy (24) resulting from leaking substance (26) from the inside (28) of the enclosure;
wherein the activation energy causes a chemical reaction (30) of the emission generating compound; and
wherein the chemical reaction actively produces an emission (32) detectable by a detector (34).

2. Arrangement according to claim 1, wherein the chemical reaction of the emission generating compound is an exothermic oxidation reaction; and
wherein the detection (36) of the detector is based on exothermic oxidation products comprising matter and/or energy.

3. Arrangement according to claim 1 or 2, wherein the activation energy for the emission generating compound:
i) results from a thermal energy release of the leaking substance; and/or
ii) is initially generated in the emission generating compound itself by contact between the emission generating compound and the leaking substance; and
wherein the activation energy causes a self-boosting effect through the chemical reaction of the emission generating compound leading to the detectable emission.

4. Arrangement according to claim 1, 2 or 3, wherein the leaking substance is hydrogen and the chemical reaction of the emission generating compound is initiated by leaking hydrogen from the enclosure.

5. Arrangement according to one of the preceding claims, wherein the emission generating compound is applied as an emission generating compound layer (38) at the surface of the enclosure.

6. Arrangement according to one of the preceding claims, wherein the emission generating compound layer is covered by a protective layer (40);
wherein the protective layer hampers deactivation of the chemical reactivity of the emission generating compound; and
wherein the emission generating compound layer is chemically reactive to the substance leaking through the protective layer.

7. Arrangement according to one of the preceding claims, wherein the emission generating compound comprises a reaction controller (42); and
wherein the reaction controller is configured to make the chemical reaction of the emission generating compound steerable towards at least one of the group of:
- generation of activation energy upon contact with the substance;
- retardation of the chemical reaction;
- enhancing the reaction products of the chemical reaction;
- isolating the reaction products from the surroundings; and
- confining the chemical reaction to a geometrically restricted space.

8. A detection system (100) for leaking substances, comprising:
- at least one detector (134); and
- a leakage sensitive arrangement according to one of the preceding claims comprising an emission generating compound layer (138);
wherein the at least one detector is located in a detection distance (102) towards the emission generating compound layer; and
wherein the at least one detector is configured to generate a detection signal (136) upon contact with an emission (132) of the emission generating compound layer in the detection distance.

9. System according to claim 8, further comprising an enclosure (116) for storing the leaking substance (126).

10. System according to claim 8 or 9, the system further comprising:
- an envelope (104);
wherein the envelope encapsulates the enclosure and the emission generating compound layer in an inner volume (106);
wherein the gap between the enclosure and the envelope in the inner volume provides an emission receiving space (108);
wherein the emission receiving space is accessible by the at least one detector; and
wherein the emission receiving space is formed to collect the emission and configured to focus and/or enhance it towards the at least one detector.

11. System according to claim 8, 9 or 10, wherein the envelope further comprises:
- at least one inlet (110); and
- at least one outlet (112) for a ventilation fluid (113);
wherein the emission receiving space of the envelope is formed to be connected to the at least one inlet and the at least one outlet;
wherein the emission receiving space provides a stream (114) comprising the ventilation fluid from the at least one inlet to the at least one outlet; and
wherein the emission receiving space is formed to steer and accelerate a detectable emission from the emission generating compound layer towards the at least one detector by the stream of ventilation fluid.

12. System according to one of the claims 8 to 11, further comprising:
- at least one supply line (150);
- at least one supply line inlet (152); and
- at least one supply line outlet (154);
wherein the supply line inlet and the supply line outlet are at the envelope; and
wherein the supply line inlet and the supply line outlet are configured to guide the at least one supply line from and/or to the enclosure.

13. System according to one of the claims 8 to 12, further comprising:
- a shutoff valve (160) at a duct arrangement (170) comprising at least one of the group of a supply duct (172), a ventilation duct (174), an exhaust duct (176) and combinations thereof; and
- a processing unit (180);
wherein the processing unit is configured to be connected to the shutoff valve and the at least one detector;
wherein the at least one supply line supplies the enclosure when the shutoff valve is open;
wherein the at least one detector is configured to monitor the enclosure;
wherein the detection signal is configured to trigger the processing unit to close the shutoff valve in order to stop supply by the supply lines to and/or from the enclosure; and
wherein the shutoff valve is configured to stop hydrogen supply to the enclosure.

14. System according to one of the claims 8 to 13, wherein the enclosure is configured as at least one of the group of:
- a fluid consuming load configured to provide electrical and/or mechanical energy from the hydrogen;
- a supply system configured to supply hydrogen;
- a storing unit configured to supply hydrogen via the supply system to a fluid consuming load and/or a functional unit; and
- a functional unit configured to be contactable by hydrogen.

15. A method (200) for leakage detection, the method comprising the following steps:
- Providing (202) an emission generating compound at an outside of an enclosure;
- Providing (204) at least one detector in a detection distance to the enclosure;
- Operating (206) the at least one detector while operating the enclosure with a substance;
- Bringing (208) leaking substance of the enclosure or burning leaking substance in contact with the emission generating compound to yield an emission;
- Detecting (210), by the at least one detector, the emission;
- Generating (212), by the at least one detector, a detection signal; and
- Stopping (214) the operation of the enclosure with the substance by closing shutoff valves, based on the detection signal.
